# EUROPEAN PATENT APPLICATION

(11) **EP 4 585 282 A1**
(43) Date of publication of application: **16.07.2025**
(21) Application number: 24219419.9
(22) Date of filing: 12.12.2024
(51) Int. Cl.: A63F 13/52, A63F 13/77, G06T 15/04, G06T 17/00

(54) **IMAGE RENDERING SYSTEM AND METHOD**

(30) Priority: 11.01.2024 GB 202400403
(71) Applicant: Sony Interactive Entertainment Inc., Tokyo 108-0075 (JP)
(72) Inventor: MONTI, Maria Chiara, London, W1F 7LP (GB); NELSON, David, London, W1F 7LP (GB); DUNN, Lauren, London, W1F 7LP (GB); AMADORI, Pierluigi Vito, London, W1F 7LP (GB)
(74) Representative: D Young & Co LLP

(57) **Abstract**

A system for rendering images for display, the system comprising a content identification unit configured to identify content to be rendered in an image for display, an intermediate file obtaining unit configured to obtain, in dependence upon the identification, one or more corresponding text-based intermediate files, a texture accessing unit configured to obtain texture content from stored texture files in dependence upon one or more parameters in the obtained intermediate files, and an image rendering unit configured to render the image for display using the obtained texture content.

## Description

### BACKGROUND OF THE INVENTION

### Field of the invention

This disclosure relates to an image rendering system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time, the amount of data required to store content such as video games has increased significantly in response to demands for increasingly high levels of graphical quality and interactivity. While a number of years ago games may have been provided to users in packages on the order of Megabytes, this is now smaller than the size of the average web page. Initially the increase in file size for content was limited by physical storage media constraints, with developers being required to optimise or compress content heavily or omit content altogether, but with digital distribution such limits have been overcome even if this may be problematic for those with slow or metered internet connections. This has led to a number of more recent games requiring on the order of 100GB of storage space for an install.

One big contributor to this increased storage requirement is the use of increasingly large, complex, and/or detailed textures for generating images of a virtual environment and elements within it. Several solutions have been developed to specifically target this problem or circumvent it - for instance, making particularly high quality textures optional within a game (through the provision of separate 4K texture packs or the like to replace the base textures), or compressing textures.

However, it is considered in the present disclosure that alternative methods for addressing the size of textures within digital content may be preferable.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an exemplary entertainment system;
Figure 2 schematically illustrates an image generation method;
Figure 3 schematically illustrates examples of texture sampling;
Figure 4 schematically illustrates a system for rendering images for display; and
Figure 5 schematically illustrates a method for rendering images for display.

### DESCRIPTION OF THE EMBODIMENTS

Referring now to the drawings, wherein like reference numerals designate identical or corresponding parts throughout the several views, embodiments of the present disclosure are described.

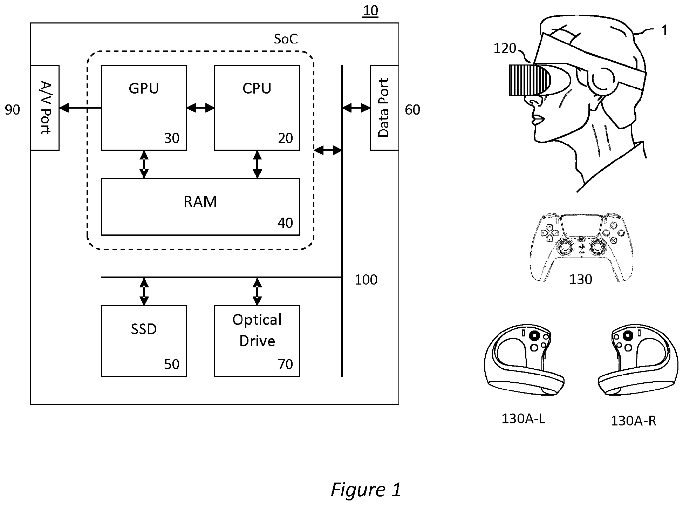

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L/-R) in the case of the HMD.

The present disclosure relates to the rendering of image content using intermediate files which reference one or more stored textures, rather than directly accessing the textures. Any suitable format of intermediate file may be used, with the discussion of SVG (Scalable Vector Graphics) files below being purely exemplary. SVG files may be considered suitable due to being text based, and therefore both small and good candidates for compression; however, any format which offers efficient data storage and the ability to reference textures may be considered suitable. As such, the following disclosure should not be considered to be limited to use with the SVG format only.

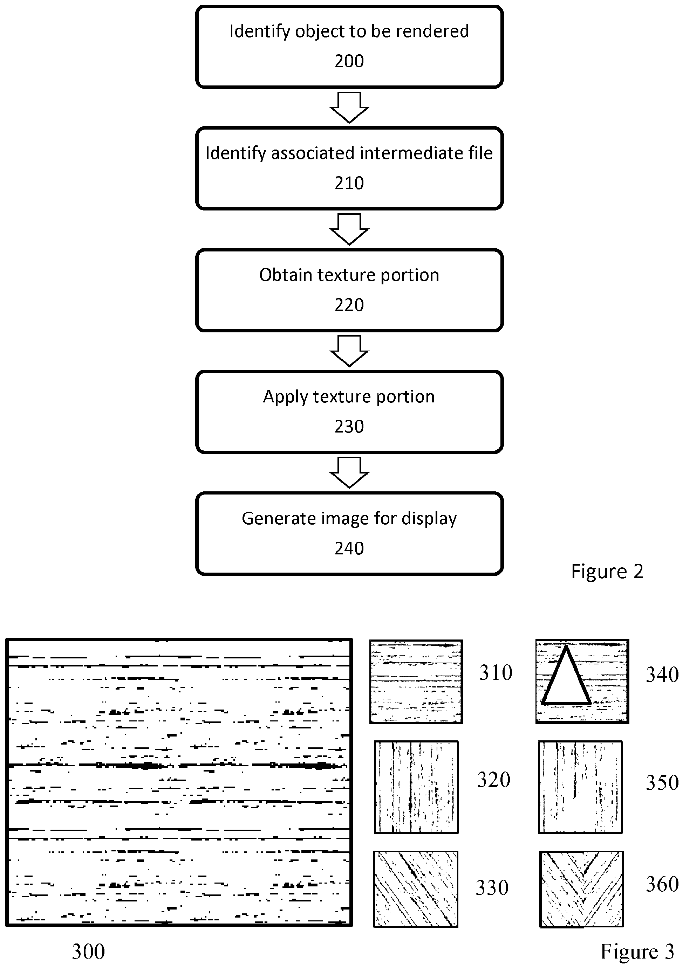

Figure 2 schematically illustrates a method which utilises such a process for rendering. In particular, this is an example of a method by which images for display can be generated using textures that are obtained using an intermediate file.

A step 200 comprises identifying an object to be rendered; this can be based upon any suitable data which is indicative of the content of an image to be rendered. For instance, an application may output data which is indicative of which objects are to be rendered, or information about target textures may be obtained from data associated with vertices in the rendering pipeline.

A step 210 comprises identifying one or more associated intermediate files corresponding to the object to be rendered (or to elements of an object, such as particular vertices). This may be through a direct association, such as an object having associated metadata identifying an intermediate file or a vertex being associated with an intermediate file, or may be more indirect via a lookup table or library of intermediate files (for example) which is consulted to determine a correspondence. In any case, the rendering process is to be configured to identify an appropriate intermediate file rather than a texture at this step.

An intermediate file may be any file, such as an SVG, which indicates at least a portion of a texture that is to be used when rendering the object (or element). In addition to the portion of a texture, the intermediate file may define one or more modifications to the sampled portion of the texture. Examples of modifications include the adding of additional elements (such as overlaying shapes), masking of the sampled portion, or any other distortion. The intermediate file may also be configured to reference several portions of the same texture, or one or more portions of each of a plurality of textures, and to combine these portions in any suitable manner (such as arranging them in a preferred configuration, blending them, and/or repeating them multiple times). In some cases, the intermediate file may include one or more variable or random factors which mean that the sampling of the texture may not be the same each time.

A step 220 comprises obtaining the texture portion (or portions) as identified in the intermediate file, and performing any described modifications as appropriate. As described above, these modifications may include the likes of adding elements, incorporating material from other textures, and/or recolouring.

A step 230 comprises using the obtained texture portion, such as applying the obtained texture portion to a mesh or other geometry. This can be performed in any manner suitable for a given graphics pipeline, rather than requiring any specifically tailored process to be performed.

A step 240 comprises generating an image for display which comprises a representation of the textured object. This image may be output for display immediately, and/or may be stored for viewing at a later time.

Such a method therefore enables texture accesses to be performed in a more targeted fashion; as a result of this, larger textures may be provided which can lead to a greater degree of compression being realised relative to storing a plurality of smaller textures; alternatively, or in addition, a texture size can be reduced by exploiting redundancies between textures or parts of the same texture.

Figure 3 schematically illustrates a number of exemplary accesses of a texture 300 in accordance with implementations of the present disclosure. The texture 300 may correspond to a piece of wood or the like, which comprises a number of surface details and may be used in a number of different ways. For instance, a wood grain may be used for a number of different wooden objects, types of wood, and/or wood that has been treated with different products (and so have different appearances). The smaller boxes to the right of the texture 300 represent sampled portions of the texture, each with different sampling parameters.

The sampled portion 310 represents a standard sampling of a texture in which a portion is selected with no modification - in other words, the sampled portion 310 corresponds exactly to a portion of the texture 300.

The sampled portion 320 represents a rotated sample of the texture 300, such that the portion 320 corresponds to a portion of the texture 300 with a ninety degree rotation. Similarly, the sampled portion 330 represents a rotated sample with an angle of forty-five degrees.

The sampled portion 340 represents the same portion of the texture 300 as the sample 310; however this has been supplemented with an additional shape being drawn over the texture. While shown here as a basic shape, this could be extended to any other image detail that is desired - such as additional grain (in the wood example), or more complex imagery such as a branding or logo that may be drawn or obtained from a reference file or the like. Other features, for instance functional elements, could also be represented by a simple two- or three-dimensional shape, such as screws or bolts which are inserted into the wood in this example.

The sampled portion 350 represents the same portion of the texture 300 as the sample 320; however this has been masked (or selectively sampled) so as to omit a portion of the texture 300. This may be advantageous in the case that the sampled portion 350 is to overlay or be overlaid by another texture portion during rendering, for example.

The sampled portion 360 represents the same portion of the texture 300 as the sample 330; however this has been modified so as to flip the left-hand side of the sample along the horizontal axis. This can therefore enable a greater range of samples to be obtained from the texture 300, as any part (or parts) of the sample can be modified or obtained independently according to the SVG or equivalent descriptive file. In the present example this may be advantageous in that it can represent joins between woodwork making up an object, for example, without requiring each portion of the woodwork to be textured separately.

While not shown in this Figure, of course any of these samples may be recoloured as appropriate for a given use. Alternatively, or in addition, the samples may be modified so as to change their opacity or other image parameters so as to cause the sampled portion of the texture to have the desired parameters for use in rendering an image.

Of course, any other modifications or the like could be utilised, and in any suitable combination; the examples described here are provided only to illustrate As illustrated by these examples, the use of an SVG or equivalent to access textures enables a much more flexible approach in which the texture can be freely sampled and modified or supplemented as desired. This increased flexibility can enable a smaller texture to be used, as modifications can be applied after sampling of the texture and therefore redundancies in textures can be more easily exploited. This is because the same portion of texture can be easily used as the basis for a number of different, but similar, texture portions as minor variations between them can be introduced after reading of the texture in accordance with instructions in the SVG or other file used to access the texture.

An intermediate file, such as an SVG, which is used to access portions of a texture can be provided in any suitable format. An example of the content of such a file is provided below; while not indicative of any particular format, it is considered that any format which is capable of carrying such information in an efficient manner would be appropriate for implementing the teachings of the present disclosure.
<identify texture> texture1.PNG
<identify sampling coordinates> (x1,y1), (x2,y2), (x3,y3), (x4,y4)
<transforms> none
<colour change> (204, 0, 0)
<add shape> (xx1, yy1), (xx2, yy2), (xx3, yy3), (0,150, 0)
<set opacity> 60%

This would be expected to generate a quadrilateral sample of texture1 which has been recoloured to red, supplemented with a green triangle, and made partially see-through. The recolouring may be performed in any suitable manner - for instance, scaling all colours in the sample by the stated value, or generating a filter based upon that value. Of course, these are only exemplary parameters and any other modifications to the sampled texture could be applied using similar notation. Each of these parameters may be associated with a further specification of coordinates or the like to indicate a portion of the sample to apply a particular effect (such as recolouring) to or a particular pattern in which to apply a particular effect (such as recolouring with a striped effect or gradient).

In some implementations it may be considered desirable to generate a single sample which reads from multiple textures, or from multiple locations in the same texture, as this can enable a more complex sample to be generated. This can be achieved through use of the intermediate file to define multiple textures and/or respective sampling locations for each of those textures. These may then be assembled based upon a predetermined scheme, or the intermediate file may specify a pre-existing scheme or define a specific scheme for assembling the obtained samples into the correct order for use in generating an image for display.

In some cases, it may be desirable for two samples to be combined using a particular pattern rather than an arrangement; for instance, a first texture may be supplemented with stripes which are obtained from a second texture. This may be achieved by providing an intermediate file which references two or more textures and then defines (or otherwise identifies from one or more reference patterns or the like) the desired combination of those textures.

In some instances, a hierarchical set of intermediate files may be utilised; in other words, an intermediate file may reference one or more additional intermediate files. This may be advantageous in that commonly used modifications (such as adding a particular set of shapes) can be stored in a library which may be referenced; this may increase the storage efficiency of the intermediate files as the repetition of common modifications across intermediate files can be reduced.

While these intermediate files may be defined by a content creator, in some cases it may be considered advantageous to automate the process. In some instances, a content creator may perform a creation process starting from a defined texture and arriving at a desired representation of at least a portion of that texture. The inputs provided by the content creator may be monitored, or derived from a video of the process (for example), and translated into a set of instructions that can be encoded into the intermediate file.

Alternatively, a machine learning model may be trained to generate intermediate files. An example of a suitable approach is that of using a Generative Adversarial Network, although other implementations may also be suitable. In this case, a dataset is provided which comprises a reference texture (or textures) and a number of samples generated from those textures. At least some of those generated samples may be associated with an intermediate file used to generate the sample; these files/samples can then be used as a training dataset for the generative model. The generative portion of the model can then be used to generate intermediate files based upon a predefined sample; this intermediate file can then be used to generate a new sample. The adversarial portion of the model can then be used to compare the predefined sample with the corresponding new sample to determine whether the intermediate file correctly represents the predefined sample.

Once trained, a content creator would then be able to input a desired sample of a texture along with any reference textures and have the model generate an intermediate file that correctly represents this. This would therefore represent an increased content generation efficiency, as there would be no need to manually define the majority of intermediate files used for a particular content.

The content storage efficiency may be improved further in some implementations by examining each of the intermediate files. Based upon these files, it can be straightforward to determine which portions of a texture are used and which are not. In response to this determination, one or more portions of the texture may be removed from the texture (if they are not used), or the texture may be rearranged. For instance, those portions of the texture which are most frequently referenced by intermediate files may be relocated towards the top left corner of the texture to reduce the length of the coordinate address (assuming an addressing scheme in which the top-left pixel is accorded a [0, 0] coordinate). This determination may consider both the number of intermediate files which reference a particular portion as well as the frequency of use of respective intermediate files (for instance, based upon playtest data in the case of a video game being rendered).

Any other optimisations may also be considered - for instance, if each time a particular portion of the texture is sampled, a particular shape is added (or any other modification applied) then the texture may be amended so as to include this feature or modification. Similarly, if a majority of the intermediate files referencing a particular texture or portion of a texture apply the same recolouring then this portion (or indeed, the entire texture) may be recoloured as appropriate. In each case, these optimisations can reduce the processing burden when rendering content as the number of operations may be reduced.

Any modifications to the textures themselves can be accounted for in the intermediate files easily due to the format of the files; being text-based with a known format, it is a simple matter to identify which portions of a texture are being referenced and which modifications are being applied. In view of this, any modifications to the textures to improve efficiency can be reflected in the corresponding intermediate files in an automated fashion without a significant burden. For example, the automation process can use information about changes to the texture to update any dependent intermediate files to reflect this - for instance, a recoloured portion of the texture will have been recoloured by a known amount, and as such reference to an inverse colouring (or deletion of a matching colouring instruction) can be applied to the intermediate file.

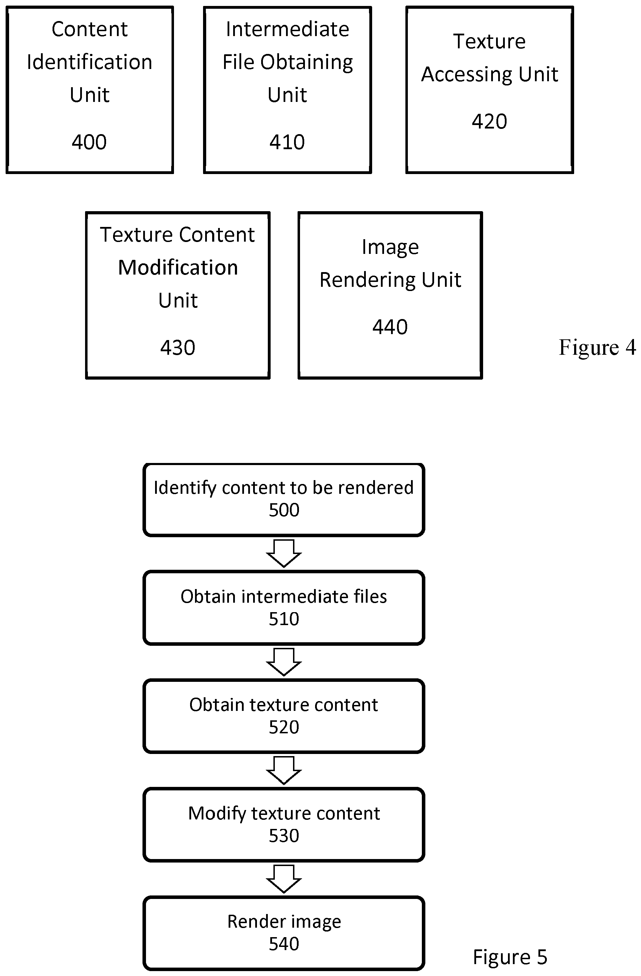

Figure 4 schematically illustrates a system for rendering images for display, the system comprising a content identification unit 400, an intermediate file obtaining unit 410, a texture accessing unit 420, a texture content modification unit 430, and an image rendering unit 440. This system may be implemented using any suitable processing hardware, such as the CPU 20 or GPU 30 shown in Figure 1.

The content identification unit 400 is configured to identify content to be rendered in an image for display; this may be identified in any suitable manner. For instance, information about content to be rendered in an image may be output by a gaming application, or may be derived based upon viewpoint information and information about elements within a virtual environment in which the viewpoint is present. The identified content may comprise any portion of an image - particular virtual objects or elements (such as GUI elements or parts of an object) may be suitable, for instance.

The intermediate file obtaining unit 410 is configured to obtain, in dependence upon the identification performed by the content identification unit, one or more corresponding text-based intermediate files. As described above, these text-based intermediate files may be in a scalable vector graphic (SVG) format or any other format that can provide similar functionality. These intermediate files may be defined for content by a content creator, but may also or instead be defined (or modified from a default) on a per-user basis so as to enable personalisation of the rendering process.

The intermediate file obtaining unit 410 may be configured to obtain intermediate files in dependence upon an identifier associated with the identified content, such as a pointer to a particular file location or a character string which identifies a particular intermediate file. Alternatively, or in addition, intermediate files may be associated with the identified content as metadata - in this case, the intermediate file obtaining unit 410 may be configured to extract the intermediate file from the metadata in response to the identification that the content is to be rendered in the image for display.

Any suitable mapping between content and intermediate files may be utilised as appropriate; in some cases, a one-to-one mapping may be appropriate in which an intermediate file corresponds to a single piece of content (such as a single object). However, one-to-many mappings may also be suitable (in which a single piece of content is associated with a plurality of intermediate files), as may many-to-one (in which multiple pieces of content each relate to a single intermediate file) and/or many-to-many mappings (in which multiple pieces of content each relate to several of a plurality of intermediate files). The suitability of a mapping type may be determined on any suitable basis, such as a per-object basis, rather than being defined for the content as a whole (for example).

It is therefore considered that in some implementations two or more intermediate files are identified for a single part of the content, and/or that a single intermediate file may be identified for multiple parts of the content as appropriate.

Similarly, mappings between content and textures may also be able to be handled in a flexible manner. For example, at least one of the intermediate files may define multiple texture files to obtain texture content from, and/or at least one of the intermediate files may define multiple sampling locations in a texture file to obtain texture content from. This can mean that for a particular piece of content a single texture can be sampled from any one or more locations within that texture, or multiple textures can each be sampled from any one or more locations within a respective texture.

The texture accessing unit 420 is configured to obtain texture content from stored texture files in dependence upon one or more parameters in the obtained intermediate files; the obtained texture content may also be referred to as 'sampled texture content' as it is obtained by sampling one or more textures at particular locations within the textures. The stored texture files may be stored locally, or may be stored remotely in a cloud-based implementation.

The texture content modification unit 430 is an optional unit that may be configured to apply one or more modifications to the to the obtained texture content in dependence upon modification data defined in obtained intermediate files. Examples of possible modifications are discussed above with reference to Figure 3, although any suitable modifications may be considered for a given implementation. The modification data may define any one or more modifications including re-colourings, opacity changes, translations, rotations, maskings, reflections, overlays, shape additions, and/or enlargements which are to be applied to at least a respective portion of the obtained texture content. The modification data may define both a type of modification and the manner in which it is to be implemented, such as defining a colour for use in recolouring and an area of the sampled texture content in which the recolouring is to be performed.

The image rendering unit 440 is configured to render the image for display using the obtained texture content. This image may be output, for instance as part of a video, for display immediately or may be stored for reproduction at a later time.

The arrangement of Figure 4 is an example of a processor (for example, a GPU, TPU, and/or CPU located in a games console or any other computing device) that is operable to render images for display, and in particular is operable to:
identify content to be rendered in an image for display;
obtain, in dependence upon the identification, one or more corresponding text-based intermediate files;
obtain texture content from stored texture files in dependence upon one or more parameters in the obtained intermediate files; and
render the image for display using the obtained texture content.

Figure 5 schematically illustrates a method for rendering images for display; this method may be implemented by the system discussed with reference to Figure 4, for example.

A step 500 comprises identifying content to be rendered in an image for display.

A step 510 comprises obtaining, in dependence upon the identification, one or more corresponding text-based intermediate files.

A step 520 comprises obtaining texture content from stored texture files in dependence upon one or more parameters in the obtained intermediate files.

An optional step 530 comprises applying one or more modifications to the to the obtained texture content in dependence upon modification data defined in obtained intermediate files.

A step 540 comprises rendering the image for display using the obtained texture content.

While the above discussion has focused on the use of intermediate files in accessing and optionally modifying textures, similar methods may also be applied for accessing and optionally modifying meshes to which textures are to be applied (either using methods described in this disclosure, or alternative methods). The methods and systems described above may be adapted for use with meshes without a significant burden upon the skilled person, as the intermediate files can be implemented in the same manner independently of the data being handled.

The intermediate file can be used to assemble meshes for use in the rendering process by referencing one or more meshes and/or portions of those meshes to obtain mesh content, with the intermediate file also being able to be used to modify the obtained mesh content in the same manner as described above for texture modification. While a mesh would not typically be recoloured or have an opacity modified, as visual appearance is typically applied using textures, a mesh could be deformed through any suitable process - including assembling mesh portions obtained from different sources (or different parts of the same source), adding or deleting vertices, translating and/or rotating vertices, and/or reflecting vertices about an axis. Instructions for these modifications can be encoded using a text-based format similarly to the example provided above for a texture.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for rendering images for display, the system comprising:
a content identification unit configured to identify content to be rendered in an image for display;
an intermediate file obtaining unit configured to obtain, in dependence upon the identification, one or more corresponding text-based intermediate files in a scalable vector graphic format;
a texture accessing unit configured to obtain texture content from stored texture files in dependence upon one or more parameters in the obtained intermediate files, the parameters indicating one or more stored texture files from which to obtain texture content and one or more modifications to be made to obtained texture content; and
an image rendering unit configured to render the image for display using the obtained texture content.

2. A system according to claim 1, wherein the identified content comprises one or more virtual objects or elements.

3. A system according to any preceding claim, wherein the intermediate file obtaining unit is configured to obtain intermediate files in dependence upon an identifier associated with the identified content.

4. A system according to any preceding claim, wherein the intermediate file obtaining unit is configured to obtain intermediate files which are associated with the identified content as metadata.

5. A system according to any preceding claim, wherein at least one of the intermediate files defines multiple texture files to obtain texture content from.

6. A system according to any preceding claim, wherein at least one of the intermediate files defines multiple locations in a texture file to obtain texture content from.

7. A system according to any preceding claim, wherein at least one of the intermediate files defines a second intermediate file which is to be used to obtain texture content.

8. A system according to any preceding claim, wherein two or more intermediate files are identified for a single part of the content.

9. A system according to any preceding claim, comprising a texture content modification unit configured to apply one or more modifications to the to the obtained texture content in dependence upon modifications defined by parameters in obtained intermediate files.

10. A system according to claim 9, wherein the modifications include re-colourings, opacity changes, translations, rotations, maskings, reflections, overlays, shape additions, and/or enlargements which are to be applied to at least a respective portion of the obtained texture content.

11. A system according to any preceding claim, wherein intermediate files are defined on a per-user basis.

12. A method for rendering images for display, the method comprising:
identifying content to be rendered in an image for display;
obtaining, in dependence upon the identification, one or more corresponding text-based intermediate files in a scalable vector graphic format;
obtaining texture content from stored texture files in dependence upon one or more parameters in the obtained intermediate files, the parameters indicating one or more stored texture files from which to obtain texture content and one or more modifications to be made to obtained texture content; and
rendering the image for display using the obtained texture content.

13. Computer software which, when executed by a computer, causes the computer to carry out the method of claim 12.

14. A non-transitory machine-readable storage medium which stores computer software according to claim 13.
